# EUROPEAN PATENT SPECIFICATION

(11) **EP 0 787 268 B1**
(45) Date of publication and mention of the grant of the patent: **13.02.2002**
(21) Application number: 95936148.6
(22) Date of filing: 16.10.1995
(51) Int. Cl.: F16L 55/07, F16L 41/06

(54) **CONNECTION OF BRANCH CONDUITS TO AN EXISTING GAS- OR LIQUID-FILLED CONDUIT**
VERBINDUNG VON ABZWEIGELEITUNGEN AN EINE MIT GAS- ODER FLÜSSIGKEIT GEFÜLLTE BESTEHENDE ROHRLEITUNG
RACCORDEMENT DE CONDUITS DE BRANCHEMENT A UN CONDUIT EXISTANT REMPLI DE GAZ OU DE LIQUIDE

(30) Priority: 21.10.1994 SE 9403654
(43) Date of publication of application: 06.08.1997
(73) Proprietor: BAUMBACH, Thorkild, S-761 40 Norrtälje (SE)
(72) Inventor: BAUMBACH, Thorkild, S-761 40 Norrtälje (SE)
(74) Representative: Johansson, Lars-Erik
(86) International application number: SE9501200
(87) International publication number: WO9612913

(56) References cited:
- WO-A-81/02461
- WO-A-89/04938
- SE-B- 377 371

## Description

### TECHNICAL FIELD

The present invention relates to a valve for connection of branch conduits to an existing gas- or liquid filled conduit which valve comprises a clamping connection for tightly clamping the valve on to the conduit in such a way that the same partially and tangentially penetrates through an opening into a straight flow channel comprised in the valve, a tool housing intended to be tightly connected at the mounting of the valve and from which housing a cutting means in the form of a piston provided with at least one cutting edge could be operated inside the flow channel in such a way that the cutting edge creates an opening in the conduit by removing the portion of the conduit which penetrates the flow channel. A valve of this kind is known from document SE-A-377 371.

### BACKGROUND ART

Several methods and means for connecting branch conduits via valves to conduits in systems filled with gas or liquid are previously known. According to a method described in the Swedish patent No. 425185, corresponding to WO-A-8 102 461, the valve is connected to the conduit in such a way that its flow channel will be tangential to the conduit. By means of a completely tight tool fixed to the connection piece of the valve a piston could be moved into the flow channel by means of applied forces. The front end of the piston which is shaped as, or provided with, a separate cutting edge also comprises a portion formed as a hook. During the axial movement of the piston through the flow channel its front end provided with the cutting edge will cut an opening in the conduit. By means of the special design of the piston with a portion formed as a hook the cut-out portion of the conduit will be caught by and maintained in the piston. When the cutting operation has been finished the piston is brought back to its initial position, the valve is closed and the tool fixed to the connection piece of the valve is removed together with the cut-out portion of the conduit. The tool is now replaced by means of a branch conduit, the valve is opened and the fluid could flow out into the branch.

According to another method described in the Swedish Patent 456522, corresponding to WO-A-8 904 938, the same type of valve as in the first mentioned patent is used, i.e. a valve which is clamped on to the conduit in such a way that the conduit partially penetrates the flow channel of the valve. The difference between the two methods is due to the design of the tools. According to the method described in the last mentioned patent the tool is constituted by a piston having a cutting recess with an edge arranged in the envelope surface of the piston. The piston is positioned in the flow channel of the valve before the valve is mounted on the conduit the cutting recess being arranged so that the same will surround the portion of the conduit which at the mounting of the valve penetrates into its channel. When the piston then is pulled into the tool the edge arranged in the cutting recess cuts the portion of the conduit which is penetrating into the flow channel of the valve. The cut-out portion of the conduit is maintained in the cutting recess and is removed together with the tool after the closing of the valve. The branch conduit is then connected as described above.

The valve which is used in the methods here described for connection of a branch conduit to an existing conduit could be described as a ball-valve the one connection piece of which has been replaced by a clamping connection for tightly clamping the valve on to a conduit which clamping means as such also comprises a prolongation of the flow channel of the valve.

The use of this type of valve has many times created obvious drawbacks and limited the usefulness of the method. As many pipings are carried out in narrow spaces of different kinds it has, even if the valve has had enough space, been impossible to reach the valve with the tool the space requirement of which depending on the design of the tool corresponds to 2-3 times the length of the flow channel. Another drawback is that you are referred to working with the tool oriented in the direction intended for the branch conduit.

A further drawback is that when the valve has been mounted and the branching has been made it will be impossible to change the direction of the branch conduit or to connect a second branch conduit.

### SUMMARY OF THE INVENTION

The object of the present invention is on one hand to eliminate the above mentioned drawbacks of the known type of valve by proposing a valve which makes it possible to use a more practical tool, on the other hand to propose a valve by which the cutting and the branching could be carried out in directions opposite to each other. These and other advantages will be achieved by means of a valve having the features of claim 1.

A further embodiment of the invention conprises the features according to claim 2.

### BRIEF DESCRIPTION OF THE FIGURES

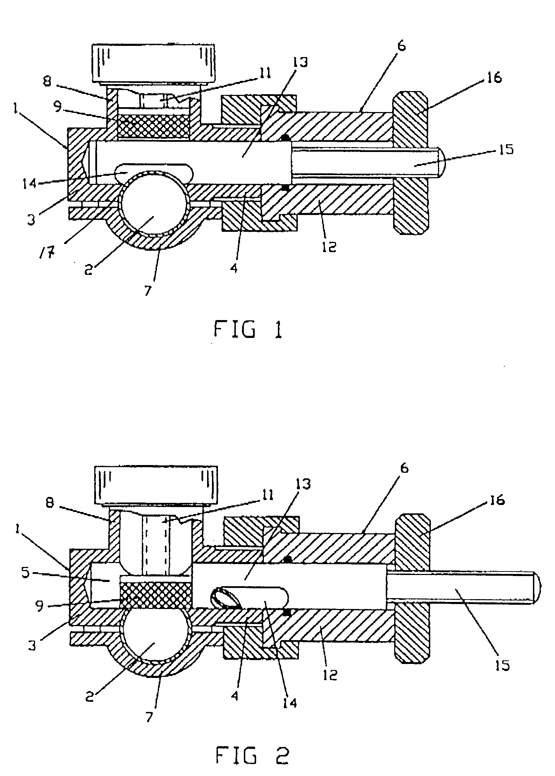

One embodiment of the invention will be described more in detail in connection to the enclosed drawing on which figure 1, partly in section, shows a valve arranged on a conduit with a cutting tool connected to the connection piece of the same in its initial position for cutting and figure 2 shows the same valve and tool as in figure 1 but after the cutting operation.

### DETAILED DESCRIPTION OF THE INVENTION

In figure 1 is shown, partly in section, a valve 1 mounted on an existing conduit 2 shown in cross section and a cutting tool 6 also in section, connected to the connection piece 4 of the valve 1. The valve 1 comprises a clamping connection 3 by means of which the valve is tightly clamped on to the conduit 2 by means of a clamp 7. In the waist portion of the clamping connection 3 is arranged a straight flow channel 5 the one end portion of which in the embodiment shown here is closed and the other end portion of which ends in the connection piece 4. In the lower wall of the flow channel 5 an opening is arranged through which a portion of the clamped conduit 2 penetrates into the channel 5. On the upper side of the clamping connection 3 opposite the opening in the wall of the flow channel 3 a cylindrical valve housing 8 is arranged in which a sealing body 9 is displaceable between two end positions, an upper one shown in figure 1 and a lower one shown in figure 2.

The cutting tool 6 comprises a tool housing 12 which is sealed against the connection piece 4. The cutting tool as such which has the form of a piston 13 having a cutting recess 14 with, a cutting edge arranged in the envelope surface of the piston is shown in figure 1 in the initial position for cutting. In order to end up in this position in which the cutting recess 14 is arranged astride the portion of the conduit which penetrates into the flow channel the piston 13 must be positioned in the flow channel 5 before the valve is clamped to the conduit 2. The piston 13 comprises a weaker portion 15 which is threaded and protrudes from the tool housing 12 and on which protruding portion a nut 16 is arranged. By means of tightening the nut 16 the piston 13 is pulled so far into the tool housing that the sealing body gets clear thereby cutting away the portion of the conduit positioned in the cutting recess and the sealing body can be tightened against the portion of the flow channel around the just created opening (17) in the conduit which portion works as a valve seat.

In figure 2 the piston 13 is shown retracted into the tool housing 8 and the sealing body 9 which has the form of half a cylinder and is made of elastic material is shown in the closed position of the valve. The cutting tool 6 with the cut-away portion from the cutting operation can now be removed and a branch conduit can be connected to the connection piece 4.

In an embodiment, not shown, the valve has connection pieces at both end portions of the flow channel making it possible to work with the tool in a direction opposite the one intended for the branch conduit if the space on this side of the valve is more suitable. The branch conduit can in that case, if suitable, be connected before the cutting operation. The connection piece which is not used is closed by means of a cover provided with a tread. The valve provided with two connection pieces also makes it possible to connect two branch conduits.

## Claims

1. A valve (1) for connection of branch conduits to an existing gas- or liquid filled conduit (2) which valve (1) comprises:
a clamping connection (3) for tightly clamping the valve (1) on to the conduit (2) in such a way that said conduit (2) partially and tangentially reaches into a straight flow channel (5) comprised in the valve through an opening (17) in the wall of said channel (5),
the at least one end portion of which channel (5) ends in a connection piece (4) arranged for connection of a branch conduit to the clamping connection (3),
a tool housing (12) arranged to be tightly connected to said connection piece (4) at the clamping of the valve (1) on to the conduit (2) from which housing (12) a cutting means in the form of a piston (13) provided with at least one cutting edge is arranged to be operated inside said flow channel (5) in such a way that the cutting edge creates an opening in the conduit (2) by removing the portion of the conduit which reaches into the flow channel (5),
the wallportion of the flow channel (5) surrounding said opening (17) constitutes the bottom of a valve housing (8) and a valve seat,
a sealing body (9) co-operating with said valve seat is arranged displaceable in said valve housing (8) controlling the fluid flow between the conduit (2) and said connection piece (4).

2. Valve according to claim 1, **characterised in that** the flow channel (5) is provided with one connection piece (4) arranged at each end portion.

## Patentansprüche

1. Ein Ventil (1) zum Verbinden von Abzweigerohrleitungen an eine mit Gas oder Flüssigkeit gefüllte Rohrleitung (2), umfassend:
eine Klemmverbindung (3) zum festen Klemmen des Ventils (1) an die Rohrleitung (2) derart, dass die Rohrleitung (2) teilweise und tangential in einen in dem Ventil enthaltenen geraden Flusskanal (5) durch eine Öffnung (17) in der Wand des Kanals (5) reicht, wobei der zumindest eine Endabschnitt des Kanals (5) in einem Verbindungsteil (4) endet, das zum Verbinden einer Abzweigerohrleitung mit der Klemmverbindung (3) angeordnet ist,
ein Werkzeuggehäuse (12), das derart angeordnet ist, dass es fest mit dem Verbindungsteil (4) verbunden ist an der Klemmung des Ventils (1) an die Rohrleitung (2), von dem Gehäuse (12) ist ein Schneidmittel in der Form eines Kolbens (13), der mit zumindest einer Schneidkante versehen ist, derart angeordnet, dass er innerhalb des Flusskanals (5) auf eine Weise betrieben wird, dass die Schneidkante eine Öffnung in der Rohrleitung (2) erzeugt durch Entfernen des Abschnittes der Rohrleitung, der in den Flusskanal (5) reicht, wobei der Wandabschnitt des Flusskanals (5), der die Öffnung (17) umgibt, den Boden eines Ventilgehäuses (8) und eines Ventilsitzes bildet,
einen Abdichtkörper (9), der mit dem Ventilsitz zusammenwirkt, und verschiebbar in dem Ventilgehäuse (8) angeordnet ist, und der den Fluidfluss zwischen der Rohrleitung (2) und dem Verbindungsteil (4) regelt.

2. Ventil nach Anspruch 1, **dadurch gekennzeichnet, dass** der Flusskanal (5) mit einem Verbindungsteil (4) versehen ist, das an jedem Endabschnitt angeordnet ist.

## Revendications

1. Soupape (1) de raccordement de conduits de branchement à un conduit existant (2) rempli de gaz ou de liquide, cette soupape (1) comprenant :
un raccordement de blocage (3) pour bloquer hermétiquement la soupape (1) sur le conduit (2) de façon que ce conduit (2) arrive partiellement et tangentiellement dans un canal d'écoulement droit (5) formé dans la soupape, par une ouverture (17) dans la paroi du canal (5) ;
l'une au moins des parties d'extrémité du canal (5) se termine dans une pièce de raccordement (4) disposée pour raccorder un conduit de branchement au raccordement de blocage (3) ;
un boîtier d'outil (12) disposé pour être raccordé hermétiquement à la pièce de raccordement (4) lorsqu'on bloque la soupape (1) sur le conduit (2), un moyen de coupe, partant du boîtier (12) et se présentant sous la forme d'un piston (13) muni d'au moins un bord de coupe, étant disposé pour être actionné à l'intérieur du canal d'écoulement (5) de façon que le bord de coupe forme une ouverture dans le conduit (2) en retirant la partie du conduit qui arrive dans le canal d'écoulement (5) ;
la partie de paroi du canal d'écoulement (5) entourant l'ouverture (17) constitue le fond d'un boîtier de soupape (8) et forme un siège de soupape ;
un corps d'étanchéité (9) coopérant avec le siège de soupape est monté mobile dans le boîtier de soupape (8) pour commander l'écoulement du fluide entre le conduit (2) et la pièce de raccordement (4).

2. Soupape selon la revendication 1,
**caractérisée en ce que**
le canal d'écoulement (5) est muni d'une pièce de raccordement (4) disposée à chaque partie d'extrémité.
